# EUROPÄISCHE PATENTSCHRIFT

(11) **EP 3 616 976 B1**
(45) Veröffentlichungstag und Bekanntmachung des Hinweises auf die Patenterteilung: **06.04.2022**
(21) Anmeldenummer: 19193372.0
(22) Anmeldetag: 23.08.2019
(51) Int. Cl.: B60L 53/14, B60L 53/62, H02J 7/00, A47L 9/28

(54) **LADESTATION FÜR EINEN VERBRAUCHER, ANORDNUNG UMFASSEND DEN VERBRAUCHER UND DIE LADESTATION SOWIE VERFAHREN**
CHARGING STATION FOR A CONSUMER, ARRANGEMENT COMPRISING THE CONSUMER AND THE CHARGING STATION AND METHOD
STATION DE CHARGE POUR UN CONSOMMATEUR, DISPOSITIF COMPRENANT LE CONSOMMATEUR ET LA STATION DE CHARGE AINSI QUE PROCÉDÉ

(30) Priorität: 27.08.2018 DE 102018214449
(43) Veröffentlichungstag der Anmeldung: 04.03.2020
(73) Patentinhaber: BSH Hausgeräte GmbH, 81739 München (DE)
(72) Erfinder: Brust, Hans-Detlef, 66125 Dudweiler (DE); Wilhelm, Mario, 98544 Zella-Mehlis (DE); Kühnel, Markus, 97616 Bad Neustadt (DE)

(56) Entgegenhaltungen:
- EP-A1- 1 473 795
- EP-A2- 2 625 763
- CN-A- 107 689 664
- JP-B2- H0 683 544
- US-A- 5 644 211
- US-A1- 2013 043 832

## Beschreibung

Die Erfindung betrifft eine Ladestation für einen Verbraucher mit den Merkmalen des Oberbegriffs des Anspruchs 1. Die Erfindung betrifft des Weiteren eine Anordnung umfassend die Ladestation und den Verbraucher sowie ein Verfahren.

Autonom sich bewegende (Haushalts-)Roboter, z. B. Staubsaugroboter, Mähroboter, werden im Betrieb von einem Akku gespeist und benötigen eine Basisstation, an der sie ihren Akku aufladen können. Die Basisstation verfügt dazu in der Regel über zwei Ladekontakte, an der die Ladespannung anliegt und die sich mit den korrespondierenden Ladeelektroden des Roboters verbinden können. Die Ladestation wird vom Roboter selbstständig und in der Regel unbeaufsichtigt angefahren, wenn der Ladezustand des Akkus stark abgesunken ist. Außerdem dient die Basisstation meist auch als Ruhestation des Roboters, wenn er seine Arbeit beendet hat. Für viele Roboter ist das Anliegen der Ladespannung an seinen Ladeelektroden zugleich ein Indiz dafür, dass sie ihre Ruheposition an der Basisstation erreicht haben.

Daher liegt an den meist frei liegenden Ladeelektroden der Basisstation die Ladespannung in der Regel kontinuierlich an. Falls ein metallischer Fremdkörper (z. B. eine Büroklammer, eine Metallfolie oder ein Stück metallischer Putzwolle) beide Elektroden berührt, kann es zu einem Kurzschluss kommen. Ein sehr niederohmiger "satter" Kurzschluss kann üblicherweise durch eine Schutzabschaltung oder Strombegrenzung des Netzteils der Basisstation, die ansprechen, wenn der erwartete Ladestrom deutlich überschritten wird, vermieden werden. Allerdings sind die Ladeströme beim Aufladen des Roboterenergiespeichers durchaus im Bereich mehrerer Ampere, so dass eine solche Schutzschaltung möglicherweise nicht ansprechen wird, falls das kurzschließende Metallteil einen entsprechenden nicht ganz niedrigen Widerstandwert aufweist. Ein Strom von mehreren Ampere kann aber schon ausreichen, ein kurzschließendes Metallteil bis zum Glühen zu erhitzen und dadurch einen Brand auszulösen bzw. zu zünden. Das gilt insbesondere dann, wenn ein leitender Fremdkörper noch leicht brennbare Anhaftungen wie Schmutz, Fett oder Öl oder Kunststoffe aufweist. Typische Beispiele für solche leitenden Fremdkörper sind metallische Putzwolle oder aber in Textilien eingewebte dünne Metallfäden. Die Gefahr, dass durch herabfallende oder versehentlich durch Haustiere zur Basisstation "verschleppte" Metallteile ein Kurzschluss erfolgt, ist dann besonders hoch, wenn sich die Ladeelektroden der Basisstation auf Bodenebene befinden. Aber auch bei seitlich angebrachten Kontakten kann z. B. durch in die Blusenärmel der Benutzerin eingewirkte Metallfäden ein Kurzschluss erfolgen, wenn die Benutzerin an der Basisstation hantiert.

Viele Roboter verfügen über Motoren, die Permanentmagnete enthalten. Deren magnetisches Feld zeigt nicht selten auch noch auf der Unterseite des Roboters eine signifikante Feldstärke, so dass der Roboter selbst u. U. kleine Metallteile anziehen und dadurch bei seiner Bewegung durch einen Raum "aufsammeln" und selbst zur Basisstation verschleppen kann. Dieser Effekt erhöht noch deutlich die Wahrscheinlichkeit, dass ein metallischer Fremdkörper schließlich auf den Ladeelektroden der Basisstation landet.

Die Druckschrift EP 1 921 523 A2 beschreibt ein System, bei dem ohne Roboter an den Ladeelektroden der Basisstation nur hochohmig über einen genau spezifizierten Widerstand eine Spannung anliegt, so dass ein Kurzschluss allenfalls zu einem ungefährlich geringeren Stromfluss führt. Der Roboter enthält das Gegenstück zum Widerstand in der Basisstation, so dass nach dem Andocken des Roboters ein definierter Serienwiderstand entsteht und ein genau definierter Strom durch die beiden Widerstände fließt. Nur wenn genau dieser vorbestimmte Strom fließt, schalten sowohl Basisstation und Roboter in den Lademodus und die eigentliche Ladespannung mit hohem Ladestrom wird von der Basisstation an die Ladekontakte angelegt.

Aus der EP 2 648 307 A1 ist eine Robotersteuereinheit bekannt, die eine Signalsendeeinheit zum elektrischen Anschluss an ein erstes Andockterminal und zum Senden eines vorbestimmten Detektionssignals enthält, und die eine Signalempfangseinheit zum elektrischen Anschluss an ein zweites Andockterminal enthält. Wenn die Signalempfangseinheit ein vorbestimmtes Rückmeldesignal empfängt, das dem vorbestimmten Detektionssignal entspricht, bestätigt die Robotersteuereinheit, dass der Roboter mit der Andockterminal-Gruppe erfolgreich an eine Dockingstation angedockt hat.

Aus der EP 2 625 763 B1 ist ein Verfahren zum elektrischen Aufladen eines elektrischen Energiespeichers mittels einer Ladestation bekannt, wobei ein elektrisches Andocken des elektrischen Energiespeichers an der Ladestation erfasst wird, dadurch gekennzeichnet, dass die Ladestation dem angedockten Energiespeicher eine elektrische Ladeenergie zuführt, wenn zwischen der Ladestation und dem angedockten Energiespeicher ausgetauschte Kommunikationssignale erfasst werden.

Die Druckschrift JP H06 83544 B2 beschreibt eine Ladestation und ein Ladeverfahren für batteriebetriebene Fahrzeuge, bei dem unter anderem eine Ladeschnittstelle mit Elektroden zur kontaktierenden Ankopplung des Verbrauchers vorgesehen ist.

Der Erfindung liegt daher die Aufgabe zugrunde, bei einer Ladestation für einen Verbraucher einen kritischen Stromfluss durch einen kurzschließenden Fremdkörper zu verhindern und damit eine Brandentstehung auszuschließen.

Diese Aufgabe wird durch eine Ladestation für einen Verbraucher mit den Merkmalen des Anspruchs 1, durch eine Anordnung umfassend die Ladestation und den Verbraucher mit den Merkmalen des Anspruchs 6 sowie durch ein Verfahren mit den Merkmalen des Anspruchs 7 gelöst. Bevorzugte oder vorteilhafte Ausführungsformen der Erfindung ergeben sich aus den Unteransprüchen, der nachfolgenden Beschreibung sowie den beigefügten Figuren.

Gegenstand der Erfindung ist eine Ladestation, welche für einen Verbraucher geeignet und/oder ausgebildet ist. Die Ladestation kann auch als Basisstation bezeichnet werden. Die Ladestation ist insbesondere stationär angeordnet und dient zum Aufladen des Verbrauchers, insbesondere eines Energiespeichers des Verbrauchers. Der Energiespeicher kann als Akku, Batterie, kapazitiver Energiespeicher etc. ausgebildet sein. Daneben kann die Ladestation auch eine Garage für den Verbraucher bereitstellen. Der Verbraucher ist besonders bevorzugt als ein autonomer Verbraucher, im Speziellen als ein energieautonomer Verbraucher und/oder als ein Roboter, insbesondere Haushaltsroboter und/oder mobiler Roboter und/oder autonomer, im Speziellen energieautonomer Roboter ausgebildet. Beispielsweise ist der Roboter als ein Rasenmäherroboter oder als ein Staubsaugerroboter realisiert. Der Roboter kann auch als Flugroboter, insbesondere Drohne ausgebildet sein. Der Verbraucher kann an die Ladestation andocken oder ankoppeln, um aufgeladen zu werden.

Die Ladestation weist eine Ladeschnittstelle auf, welche durch Elektroden gebildet ist. Besonders bevorzugt weist die Ladeschnittstelle mindestens oder genau zwei Elektroden auf, wobei die eine Elektrode als ein Pluspol und die andere Elektrode als ein Massepol oder Minuspol ausgebildet ist. Der Verbraucher weist eine Gegenschnittstelle auf, welche kompatibel und/oder komplementär zu der Ladeschnittstelle ausgebildet ist. Insbesondere können Ladeschnittstelle und Gegenschnittstelle derart gekoppelt werden, dass ein Ladestrom übertragbar ist. Die Verbindung zwischen der Ladeschnittstelle und der Gegenschnittstelle erfolgt kontaktierend und insbesondere nicht kontaktlos. Die Übertragung des Ladestroms erfolgt somit insbesondere über Kabel, Leiterbahnen und andere metallische Leiter.

Der Verbraucher weist eine Ladeeinrichtung und einen Energiespeicher auf, wobei die Gegenschnittstelle über die Ladeeinrichtung mit dem Energiespeicher verschaltet ist, so dass der Energiespeicher über die Gegenschnittstelle aufladbar ist. Insbesondere kann an die Gegenschnittstelle ein Ladestrom angelegt werden, welcher zum Aufladen des Energiespeichers dient.

Die Ladestation weist eine Versorgungseinrichtung zur Versorgung der Ladeschnittstelle insbesondere mit Energie und/oder mit Ladestrom und/oder Ladespannung, auf. Die Versorgungseinrichtung ist in einen Ladezustand und in einen Nicht-Ladezustand setzbar. In dem Ladezustand wird ein Ladestrom und/oder eine Ladespannung zum Laden des Energiespeichers an der Ladeschnittstelle bereitgestellt. In dem Nicht-Ladezustand ist die Ladeschnittstelle insbesondere von der Versorgungseinrichtung spannungslos gesetzt.

Die Ladestation weist eine Detektionseinrichtung zur Detektion der Ankopplung des Verbrauchers an die Ladeschnittstelle auf. Insbesondere kann die Detektionseinrichtung einen Status "Verbraucher angekoppelt/angedockt" oder "Verbraucher nicht angekoppelt/angedockt" ausgeben. Die Detektionseinrichtung kann als eine digitale Datenverarbeitungseinrichtung, wie zum Beispiel ein Mikroprozessor oder dergleichen ausgebildet sein, alternativ oder ergänzend ist die Detektionseinrichtung als eine analoge Schaltung ausgebildet.

Im Rahmen der Erfindung wird vorgeschlagen, dass die Detektionseinrichtung insbesondere programmtechnisch und/oder schaltungstechnisch, ausgebildet ist, bei einem Nicht-Ladezustand der Versorgungseinrichtung eine elektrische Größe basierend auf der Energiespeicherspannung des Energiespeichers als Detektionsgröße zur Detektion der Ankopplung des Verbrauchers an die Ladeschnittstelle zu erfassen. Unter der "Energiespeicherspannung" ist hier und im Folgenden insbesondere auch deren (vorzugsweise aktueller) Wert / Größe zu verstehen. Die Detektionseinrichtung registriert somit eine elektrische Größe, welche durch die Energiespeicherspannung erzeugt oder zumindest beeinflusst wird.

Es ist dabei eine Überlegung der Erfindung, dass die positive Detektion des Energiespeichers eine sehr sichere Detektionsgröße zur Detektion der Ankopplung des Verbrauchers an die Ladeschnittstelle darstellt. Andere Detektionsmethoden identifizieren zum Beispiel Störobjekte, insbesondere metallische Störobjekte, fälschlicherweise als Verbraucher. Dagegen führt die erfindungsgemäße Detektionseinrichtung zu einer Detektion, welche auf den elektrischen Eigenschaften - insbesondere Wert / Größe, siehe oben - des Energiespeichers beruht, die damit eine Verwechslung mit passiven Gegenständen, insbesondere den metallischen Störobjekten, ausschließt. Ein weiterer Vorteil der Detektionseinrichtung ist es, dass von Seiten der Ladestation keine Ladespannung oder Ladestrom bei der Detektion des Verbrauchers aufgeschaltet wird, so dass eine Brandgefahr basierend auf einen Stromfluss durch ein metallisches Störobjekt ausgeschlossen ist. Somit stellt die Erfindung eine sichere Detektion der Ankopplung des Verbrauchers an die Ladeschnittstelle bereit, wobei zugleich eine Brandgefahr ausgeschlossen ist.

Besonders vorteilhaft ist, dass die Ladestation ein Nachrüstsystem für bereits bestehende Verbraucher ohne Änderung des Verbrauchers selbst bilden kann, also nur durch Austausch der Ladestation einsetzbar ist. Spezifische Anpassungen an den Verbraucher sind nicht notwendig.

Entsprechend einem nicht unter die vorliegende Erfindung fallenden Beispiel ist die Detektionsgröße, insbesondere die elektrische Größe, die an den Elektroden anliegende Restspeicherspannung - insbesondere Wert / Größe, siehe oben. Unter Restspeicherspannung wird der Anteil der Energiespeicherspannung verstanden, welcher nach Durchlaufen der Ladeeinrichtung des Verbrauchers an der Gegenschnittstelle und/oder an der Ladeschnittstelle anliegt. Die Verringerung der Energiespeicherspannung zu der Restspeicherspannung kann durch elektrische und/oder elektronische Komponenten, wie zum Beispiel Widerstände, Spannungsteiler, Dioden etc. begründet sein.

Entsprechend einem nicht unter die vorliegende Erfindung fallenden Beispiel weist die Ladestation einen Belastungswiderstand auf, welcher schaltungstechnisch zwischen den Elektroden der Ladeschnittstelle angeordnet ist. Als Detektionsgröße wird ein Spannungsabfall - insbesondere Wert / Größe, siehe oben - an dem Belastungswiderstand zwischen den Elektroden der Ladeschnittstelle erfasst. Vorzugsweise ist der Belastungswiderstand mindestens hochohmig ausgebildet. Unter hochohmig wird insbesondere ein Widerstandswert verstanden, welcher so bemessen ist, dass mindestens 95 %, vorzugsweise mindestens 98 % der an den Elektroden der Ladeschnittstelle anliegenden Restspeicherspannung abfällt. Beispielsweise kann der Belastungswiderstand größer als 1 MOhm, vorzugsweise größer als 5 MOhm und insbesondere größer als 9 MOhm ausgebildet sein.

Erfindungsgemäß ist vorgesehen, dass die Ladeeinrichtung des Verbrauchers eine Sperrdiode aufweist, wobei die Detektionsgröße als ein Sperrstrom durch die Sperrdiode ausgebildet ist. Die Energiespeicherspannung treibt und/oder verursacht den Sperrstrom, so dass der Sperrstrom eine elektrische Größe basierend auf der Energiespeicherspannung des Energiespeichers bildet. Der Sperrstrom - insbesondere Wert / Größe, siehe oben - kann beispielsweise als Spannungsabfall an einem Belastungswiderstand gemessen werden. Die Sperrdiode kann auch als Eingangsschutzdiode bezeichnet werden. Diese Diode dient zum einen als Verpolungsschutz, falls der Verbraucher falsch auf die Elektroden aufgesetzt werden sollte, und hat zum anderen die Aufgabe, einen eventuellen Kurzschluss zu verhindern, falls die Gegenelektroden des Verbrauchers durch ein Metallteil kurzgeschlossen werden, beispielsweise weil ein Verbraucher mit seitlich angebrachten Ladeelektroden ein metallisches Stuhlbein mit beiden Elektroden berührt. Ferner dient die Sperrdiode dazu, eine Entladung des Verbrauchers über die Ladestation zu verhindern, falls sich der Verbraucher mit aufgeladenem Energiespeicher auf der Ladestation befindet, die Ladestation aber aktuell keine Netzspannung beispielsweise aufgrund eines Stromausfalls erhält. Bei dieser Diode handelt es sich vorzugsweise um eine Leistungsdiode, die den mehrere Ampere betragenden Ladestrom des Verbrauchers weitgehend verlustlos durchschalten können muss. Daher wird sie zumeist auch einen relativ großen Sperrstrom z. B. in der Größenordnung von mehr als 50 µA, insbesondere mehr als 100 µA aufweisen.

Die Detektion des Sperrstroms durch die Detektionseinrichtung erfolgt bevorzugt durch eine Spannungsdetektion über einen oder den Belastungswiderstand der Ladestation, welcher zwischen den Elektroden der Ladeschnittstelle verschaltet ist. Insbesondere wird der Wert / Größe (siehe oben) der Spannung als Detektionsgröße erfasst. Der Belastungswiderstand ist jedoch mittel- bis hochohmig ausgebildet. Der Belastungswiderstand ist so bemessen, dass weniger als 95 %, vorzugsweise weniger als 90 % und insbesondere weniger als 85 % der an den Elektroden der Ladeschnittstelle anliegenden Restspeicherspannung an dem Belastungswiderstand abfällt. Bei dieser Ausgestaltung der Erfindung ist es zwar nachteilig, dass der erwartete Spannungswert im Gegensatz zur vorhergehenden Ausgestaltung nicht genau definiert ist, denn dieser hängt vom Sperrstrom der Sperrdiode ab und ist damit stark einem Temperatureinfluss und Exemplarstreuungen unterworfen. Vorzugsweise wird der Belastungswiderstand jedoch so dimensioniert, dass die abfallende Spannung die eventuelle Spannung eines schwachen chemischen Elements und/oder 1,6 V, vorzugsweise 1,8 V und insbesondere 2 V überschreitet. Auf diese Weise kann der Verbraucher sicher detektiert werden. Im Gegensatz zu dem zuvor nicht unter die vorliegende Erfindung fallenden Beispiel wird durch die Verwendung eines mäßig hochohmigen Belastungswiderstands erreicht, dass Störeinflüsse, die bei sehr hochohmigen Belastungswiderständen durch eine Antennenwirkung der Belastungswiderstände bei der Spannungsmessung entstehen können, eliminiert oder zumindest verringert sind. Nachdem derartige Störeinflüsse insbesondere durch elektrostatische Auf- und Entladungen entstehen können, ergibt sich durch die erfindungsgemäße Ausgestaltung eine höhere Störsicherheit.

Erfindungsgemäß weist die Ladestation eine Steuereinrichtung auf. Die Steuereinrichtung kann als eine separate Einrichtung ausgebildet sein oder einen integralen Bestandteil der Detektionseinrichtung bilden. Für den Fall, dass die Steuereinrichtung als eine separate Einrichtung ausgebildet ist, kann diese als digitale Verarbeitungseinrichtung und/oder schaltungstechnische Verarbeitungseinrichtung ausgebildet sein. Die Steuereinrichtung ist erfindungsgemäß programmtechnisch und/oder schaltungstechnisch ausgebildet, auf Basis der Detektionsgröße die Versorgungseinrichtung zwischen dem Ladezustand und dem Nicht-Ladezustand umzuschalten. Hierzu kann die Steuereinrichtung die Detektionsgröße und/oder einen auf der Detektionsgröße basierenden Status wie z. B. "Verbraucher angekoppelt/angedockt" oder "Verbraucher nicht angekoppelt/angedockt" erhalten. Insbesondere ist die Steuereinrichtung ausgebildet, bei dem Status "Verbraucher angekoppelt/angedockt" oder einer entsprechenden Detektionsgröße die Versorgungseinrichtung von dem Nicht-Ladezustand in den Ladezustand umzuschalten.

Bei einer bevorzugten konstruktiven Anpassung der Erfindung weist die Ladestation eine Trenneinrichtung zur Unterbrechung des Ladestroms und/oder der Ladespannung auf. Die Trenneinrichtung ist insbesondere zum Abkoppeln der Ladeschnittstelle, insbesondere mindestens einer Elektrode der Ladeschnittstelle, ausgebildet. Beispielsweise ist die Trenneinrichtung als ein Schalter, z. B. als ein Relais oder MOS-FET, ausgebildet. Die Steuereinrichtungen ist ausgebildet, die Trenneinrichtung anzusteuern, um die Versorgungseinrichtung zwischen dem Ladezustand und dem Nicht-Ladezustand umzuschalten.

Es ist bevorzugt, dass die Ladestation eine Ladestromprüfeinrichtung zur Erfassung des Ladestroms aufweist. Bei der Detektion der Detektionsgröße muss berücksichtigt werden, dass es im Ladezustand zu einem selbsthaltenden Effekt kommt, sobald der Verbraucher einmal erkannt und die Ladespannung und/oder der Ladestrom aufgeschaltet wurde. In diesem Fall wird jede weitere Spannungsmessung an dem Belastungswiderstand nur noch die Ladespannung der Versorgungseinrichtung messen. Durch die Ladestromprüfeinrichtung wird der Ladestrom überwacht, so dass erkannt werden kann, wenn der Verbraucher den Ladevorgang abbricht oder beendet. In diesem Fall wird der Ladestrom zusammenbrechen und/oder auf 0 gehen. Ein fehlender Ladestrom ist zwar eine notwendige Bedingung für das Abdocken des Verbrauchers, aber keine hinreichende Bedingung. Es kann nämlich durchaus der Fall auftreten, dass der Verbraucher mit teilentladenem Energiespeicher auf die Ladestation auffährt, dort den Energiespeicher voll auflädt und danach keinen weiteren Ladestrom aufnimmt aber dennoch die Ladestation nicht verlässt, da seine Arbeit beendet ist und er nun in Bereitschaftsstellung auf der Ladestation verbleibt. Ob in diesem Bereitschaftzustand ein kleiner Versorgungsstrom für den aktuellen Verbrauch der Verbraucherelektronik von der Ladestation oder aus dem Energiespeicher aufgenommen wird, hängt von der Bauart des Verbrauchers ab. Optional erfolgt die Stromaufnahme im Bereitschaftsbetrieb beispielsweise ausschließlich aus dem Energiespeicher. Optional könnte man auch die Ladespannung immer wieder kurzzeitig unterbrechen und während der Unterbrechung eine Verbraucherdetektion wie zuvor beschrieben durchführen. Ständige Unterbrechungen während eines Ladevorgangs würden aber die gesamte Ladezeit verlängern und die ständigen Unterbrechungen wären auch nicht vorteilhaft im Hinblick auf die Lebensdauer des Energiespeichers. Daher wird zusätzlich der Ladestrom geprüft (Ein fehlender Ladestrom ist ja ein notwendiges Kriterium für das Abdocken des Verbrauchers) und es erfolgt keine neue Verbraucherdetektion solange nach der Erstdetektion des Verbrauchers der Ladestrom fließt.

Es ist bevorzugt vorgesehen, dass die Steuereinrichtung die Versorgungseinrichtung ansteuert von dem Ladezustand in den Nicht-Ladezustand zu gehen, sobald über den Ladestrom und/oder die Ladestromprüfeinrichtung erkannt wird, dass der Verbraucher den Status "Verbraucher nicht ladend" eingenommen hat. Insbesondere ist die Detektionseinrichtung programmtechnisch und/oder schaltungstechnisch ausgebildet, bei einem Ladezustand der Versorgungseinrichtung eine weitere elektrische Größe basierend auf dem Ladestrom als weitere Detektionsgröße zu Detektion des Ladens des Verbrauchers an der Ladeschnittstelle zu erfassen.

Ein weiterer Gegenstand der Erfindung betrifft eine Anordnung, welche die Ladestation, wie diese zuvor beschrieben wurde bzw. nach einem der vorhergehenden Ansprüche sowie den Verbraucher umfasst. Erfindungsgemäß weist die Ladeeinrichtung des Verbrauchers die zuvor beschriebene Sperrdiode auf, wobei die Sperrdiode schaltungstechnisch zwischen der Gegenschnittstelle und dem Energiespeicher angeordnet ist.

Die Problemstellung, die die Erfindung für einen Roboter löst, kann jedoch in ähnlicher Form auch für manuell betriebene Reinigungsgeräte als Verbraucher auftreten. Konkret handelt es sich dabei um akkubetriebene Handgeräte. Bei der Aufladung mit einem Steckernetzteil, das über ein Kabel mit angeschlossenem Steckverbinder mit dem Gegenstück im Staubsauger verbunden wird, stellt sich das Problem nicht, da es keine großflächigen offenliegenden Elektroden gibt. Ein Verbraucher bzw. Gerät jedoch, z. B. ein Feuchtsauger, das über eine Art auf dem Boden stehende Ladestation verfügt, auf dem das Gerät abgestellt und dort aufgeladen werden kann, weist jedoch ähnliche Probleme auf. Mechanisch wird das Gerät z. B: an der Ladestation eingehängt und über relativ große offenliegende Elektroden (nicht am Boden aber seitlich in Bodennahe) mit Ladestrom versorgt. Wann immer das Gerät von der Ladestation entfernt wird, z. B. um den Raum zu reinigen, liegen die Ladeelektroden der Ladestation offen und es besteht im Prinzip die gleiche Gefahr wie beim Roboter-System. Wenn das Gerät entfernt ist, z. B. der Benutzer einen anderen Raum saugt oder gar den Staubsauger noch geladen in einem anderen Raum unbenutzt abstellt(nicht so selten in mehrgeschossigen Wohnungen) befindet sich die Ladestation in einemunbeaufsichtigten Betrieb - also exakt der gleiche Fall wie beim Roboter-System. Dieses Sicherheitsproblem kann in exakt gleicher Weise wie beim Roboter durch die Erfindung gelöst werden.

Ein weiterer Gegenstand der Erfindung betrifft ein Verfahren zur Detektion des Verbrauchers durch die Ladestation, wie diese zuvor beschrieben wurden bzw. nach einem der vorhergehenden Ansprüche.

Das Verfahren umfasst einen Schritt zur Detektion der Ankopplung des Verbrauchers an die Ladeschnittstelle, wobei bei einem Nicht-Ladezustand der Versorgungseinrichtung eine elektrische Größe - insbesondere Wert / Größe, siehe oben - basierend auf der Energiespeicherspannung des Energiespeichers als Detektionsgröße zur Detektion der Ankopplung des Verbrauchers an die Ladeschnittstelle erfasst wird, wie dies zuvor beschrieben wurde. Erfindungsgemäß wird als elektrische Größe der Sperrstrom - insbesondere Wert / Größe, siehe oben - durch die zuvor beschriebene Sperrdiode verwendet. Soweit von der Detektionseinrichtung die Detektionsgröße erfasst wurde und durch die Detektionseinrichtung und/oder die Steuereinrichtung ausgewertet wurde, wird die Versorgungseinrichtung vom Nicht-Ladezustand in den Ladezustand gesetzt.

Bei einer bevorzugten Weiterbildung der Erfindung wird der Ladestrom durch die Ladestromprüfeinrichtung insbesondere zyklisch und/oder regelmäßig erfasst, wobei beispielsweise alle 5 Sekunden eine Messung durchgeführt wird. Sofern der Ladestrom - insbesondere Wert / Größe, siehe oben - positiv detektiert ist, wird der Ladevorgang fortgesetzt. Für den Fall, dass der Ladestrom kleiner als ein vorgebbarer Grenzwert für eine vorgebbare Dauer ist, wird von der Steuereinrichtung und/oder der Detektionseinrichtung darauf geschlossen, dass der Ladevorgang beendet ist oder der Verbraucher von der Ladestation abgekoppelt oder abgedockt ist. Vorzugsweise wird in diesem Fall die Versorgungseinrichtung auf Nicht-Ladezustand gesetzt und es wird wahlweise eine Andockerkennung über die elektrische Größe basierend auf der Energiespeicherspannung des Energiespeichers als Detektionsgröße zur Detektion der Ankopplung des Verbrauchers an die Ladeschnittstelle durchgeführt.

Das beschriebene Verfahren funktioniert offensichtlich dann und nur dann, wenn der Energiespeicher dem Verbraucher eine Versorgungsspannung zur Verfügung stellen kann. Es versagt daher, wenn der Energiespeicher zum Schutz gegen Tiefentladung seine Ausgangsspannung abgeschaltet hat. Speziell Lithium-Ionen-Akkus als Energiespeicher weisen aus Sicherheitsgründen ein eigenes Batteriemanagement-System auf, das die Verbindung des Akkus zur Umgebung trennt, wenn die Akkuspannung einen Sicherheitslevel unterschreitet. Ein solcher Akku könnte daher gar nicht mit der beschriebenen Ladestation aufgeladen werden. Mit abgeschaltetem Akku wird der Verbraucher natürlich nicht selbstständig auf die Ladestation auffahren können, sondern er wird vom Benutzer auf die Ladestation gestellt werden. Es handelt sich dann also nicht um einen unbeaufsichtigten Betrieb, sondern der Benutzer ist anwesend und könnte einen die Elektroden kurzschließenden Fremdkörper erkennen und entfernen. In diesem Fall wäre es also durchaus zulässig, die Ladespannung unabhängig von der Verbrauchererkennung kurzzeitig aufzuschalten, damit auch ein zum Schutz gegen Tiefentladung abgeschalteter Akku aufgeladen werden kann. Die Zeitdauer der Aufschaltung der Ladespannung sollte dabei so bemessen sein, dass danach der Akku hinreichend stark geladen wird, um seine Abschaltung aufzuheben. Die Aufschaltung der Ladespannung kann dabei manuell z. B. über einen vom Benutzer zu betätigenden insbesondere verdeckt angebrachten Schalter (verdeckt, damit ihn nicht der Verbraucher durch seine Bewegung versehentlich betätigen kann) initiiert werden eine andere Möglichkeit wäre z. B. nach dem Einschalten der Netzspannung die Ladespannung einige Sekunden aufzuschalten. Der Benutzer kann dann die Ladung des Akkus bewirken, indem er kurz den Netzstecker der Basisstation zieht und wieder einsteckt.

Weitere Merkmale, Vorteile und Wirkung der Erfindung ergeben sich aus der nachfolgenden Beschreibung eines bevorzugten Ausführungsbeispiels der Erfindung sowie der beigefügten Figuren. Diese zeigen:
Figur 1 eine schematische Blockdarstellung von einer Anordnung umfassend eine Ladestation und einen Verbraucher als ein Ausführungsbeispiel der Erfindung;
Figur 2 ein schematisches Zustandsdiagramm von einem Verfahren zur Detektion eines Verbrauchers durch eine Ladestation.

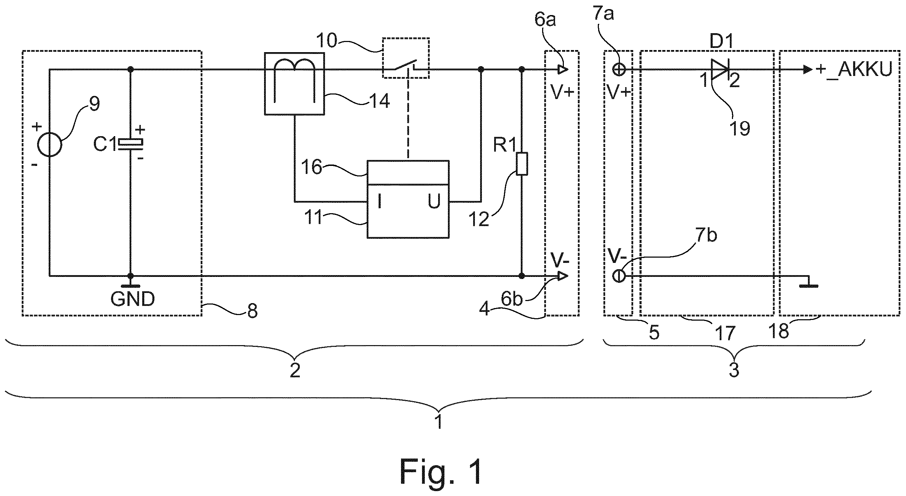

Die Figur 1 zeigt in einer stark schematisierten Darstellung eine Anordnung 1 mit einer Ladestation 2 sowie einem Verbraucher 3 beispielhaft ausgebildet als ein Roboter. Der Verbraucher 3 ist als ein mobiler Verbraucher 3 ausgebildet, welcher selbsttätig verfahren kann. Hierzu weist der Verbraucher 3 eine Fahreinrichtung (nicht gezeigt) auf, welche beispielsweise angetriebene Räder umfasst. Der Verbraucher 3 ist beispielsweise als ein Staubsaugerroboter oder als ein Mähroboter ausgebildet, kann jedoch auch als ein Flugroboter realisiert sein. Die Ladestation 2 ist als eine Basisstation für den Verbraucher 3 ausgebildet und ermöglicht es, den Verbraucher 3 mit elektrischem Strom aufzuladen.

Zur elektrischen Kopplung zwischen der Ladestation 2 und dem Verbraucher 3 weist die Ladestation 2 eine Ladeschnittstelle 4 und der Verbraucher 3 eine Gegenschnittstelle 5 auf, welche mittels elektrischer Kontaktierung, also kontaktierend, miteinander gekoppelt werden können. Die Ladestation 2 weist Elektroden 6 a, b in der Ladeschnittstelle 4, der Verbraucher 3 weist Gegenelektroden 7 a, b in der Gegenschnittstelle 5 auf. Bei der elektrischen Kopplung werden die Elektrode 6 a mit der Gegenelektrode 7 a sowie die Elektrode 6 b mit der Gegenelektrode 7 b miteinander kontaktiert.

Die Ladestation 2 weist eine Versorgungseinrichtung 8 auf, welche zur Bereitstellung einer Ladespannung und eines Ladestroms ein Schaltnetzteil 9 umfasst, welches eine Gleichspannung beispielhaft von 19 V bereitstellt. Zur Glättung ist ein Kondensator C 1 vorgesehen. Die Versorgungseinrichtung 8 versorgt die Ladeschnittstelle 4 bzw. die Elektroden 6 a, b mit der Ladespannung und/oder mit dem Ladestrom.

Die Ladestation 2 ist in einen Ladezustand setzbar, wobei die Ladeschnittstelle 4 mit der Ladespannung und optional ergänzend mit dem Ladestrom versorgt wird. Die Versorgungseinrichtung 8 ist auch in einen Nicht-Ladezustand setzbar, wobei die Ladespannung und/oder der Ladestrom an der Ladeschnittstelle 4 nicht anliegt. Das Umschalten zwischen Ladezustand und Nicht-Ladezustand wird durch eine Trenneinrichtung 10 umgesetzt, welche zwischen der Versorgungseinrichtung 8 und der Ladeschnittstelle 4, insbesondere der Elektrode 6 a angeordnet ist. Die Trenneinrichtung 10 ist bei dem Ausführungsbeispiel als ein steuerbares Schaltelement realisiert.

Zwischen den Elektroden 6 a, b ist ein Belastungswiderstand 12 angeordnet, über den die Elektroden 6 a, b miteinander insbesondere untrennbar und/oder dauerhaft verbunden sind. Der Belastungswiderstand 12 weist bei diesem Ausführungsbeispiel einen Widerstand von 100 KOhm auf.

Die Ladestation 2 weist eine Detektionseinrichtung 11 auf, welche die an dem Belastungswiderstand 12 abfallende Spannung bzw. den Spannungsabfall U als eine Detektionsgröße misst.

Ferner weist die Ladestation 2 eine optionale Ladestromprüfeinrichtung 14 auf, welche den über die Ladeschnittstelle 4 laufenden Ladestrom I der Versorgungseinrichtung 8 abgrenzt. Die Detektionseinrichtung 11 ist mit der Ladestromprüfeinrichtung 14 signaltechnisch oder schaltungstechnisch verbunden, so dass von der Detektionseinrichtung 11 der Ladestrom I erfasst wird. Die Ladestromprüfeinrichtung 14 ist beispielsweise als ein Shunt oder eine galvanisch getrennter Hall-Sensor umgesetzt. Der Abgriff des Ladestroms erfolgt zwischen der Versorgungseinrichtung 8 und der Trenneinrichtung 10, der Abgriff der an dem Belastungswiderstand 12 abfallenden Spannung erfolgt zwischen der Trenneinrichtung 10 und der Ladeschnittstelle 4.

Die Ladestation 2 weist eine Steuereinrichtung 16 auf, welche einen integralen Teil der Detektionseinrichtung 11 bilden kann oder als eine separate Komponente ausgebildet ist und mit dieser signaltechnisch verbunden ist. Die Steuereinrichtung 16 steuert die Trenneinrichtung 10, um die Versorgungseinrichtung 8 und/oder die Ladestation 2 zwischen dem Ladezustand und dem Nicht-Ladezustand umzuschalten.

Der Verbraucher 3 weist eine Ladeeinrichtung 17 sowie einen Energiespeicher 18, wie z. B. einen Akku, auf, wobei die Ladeeinrichtung 17 zwischen der Gegenschnittstelle 5 und dem Energiespeicher 18 elektrisch angeordnet ist, so dass der Ladestrom von der Gegenschnittstelle 5 zu dem Energiespeicher 18 geführt ist. Ferner weist die Ladeeinrichtung 17 eine Sperrdiode 19 auf, welche zwischen der Gegenelektrode 7 a und dem Energiespeicher 18 geschaltet ist, um einen Rücklaufstrom von dem Energiespeicher 18 zu der Gegenschnittstelle 5 zu verhindern.

Funktional betrachtet kann die Anordnung 1, insbesondere die Ladestation 2, eine Ankopplung oder ein Andocken des Verbrauchers 3 an der Ladestation 2, wobei die Gegenschnittstelle 5 mit der Ladeschnittstelle 4 elektrisch kontaktiert, detektieren.

Hierzu wird die Versorgungseinrichtung 8 über die Detektionseinrichtung 11 und/oder die Steuereinrichtung 16 in einen Nicht-Ladezustand gesetzt, indem die Trenneinrichtung 10 geöffnet wird. In einem ungekoppelten oder abgedockten Zustand zwischen der Ladestation 2 und dem Verbraucher 3 fällt an dem Belastungswiderstand 12 keine Spannung ab.

Die Detektionseinrichtung 11 kann somit keine Spannung erfassen, so dass auf einen ungekoppelten Zustand geschlossen werden kann. Sobald der Verbraucher 3 mit der Ladestation 2 gekoppelt ist, also nach einem Andockvorgang, liegt an der Ladeschnittstelle 4 eine Restspeicherspannung an, die sich aus der Energiespeicherspannung des Energiespeichers 8 abzüglich eines Spannungsabfalls in der Ladeeinrichtung 17, insbesondere abzüglich des Spannungsabfalls an der Sperrdiode 19 ergibt.

Über den Belastungswiderstand 12 fließt dann ein Sperrstrom, wobei an dem Belastungswiderstand 12 ein Spannungsabfall gemessen werden kann und auf den Sperrstrom rückgeschlossen werden kann. Der Belastungswiderstand 12 ist gezielt so ausgelegt, dass ein Sperrstrom fließt, da - wie bereits zuvor erläutert - die Störungsempfindlichkeit bei einem mittel- bis hochohmigen Widerstand, der einen Sperrstrom erlaubt, deutlich reduziert ist. Der Belastungswiderstand 12 ist jedoch so abgestimmt, dass der Spannungsabfall größer als die Spannung von chemischen Elementen in der Spannungsreihe und/oder größer als 2 V ist.

Sobald von der Detektionseinrichtung 11 ein derartiger Spannungsabfall detektiert wird, wird auf ein korrektes Andocken des Verbrauchers 3 an der Ladestation 2 geschlossen und die Trenneinrichtung 10 wird geschlossen, um die Versorgungseinrichtung 8 von dem Nicht-Ladezustand in den Ladezustand umzuschalten.

Bei dem nachfolgenden Laden des Energiespeichers 18 durch die Versorgungseinrichtung 8 wird über die Detektionseinrichtung 11 der Ladestrom I überwacht. Sobald der Ladestrom I einen vorgeben Wert unterschreitet wird wahlweise auf ein Abdocken des Verbrauchers 3 von der Ladestation 2 oder von einem Abschluss des Ladevorgangs ausgegangen. Um diese zwei Zustände unterscheiden zu können kann zum einen die Trenneinrichtung 10 geöffnet werden und nochmals der Spannungsabfall an dem Belastungswiderstand 12 gemessen werden, um zu überprüfen ob der Verbraucher 3 noch an der Ladestation 2 angedockt ist.

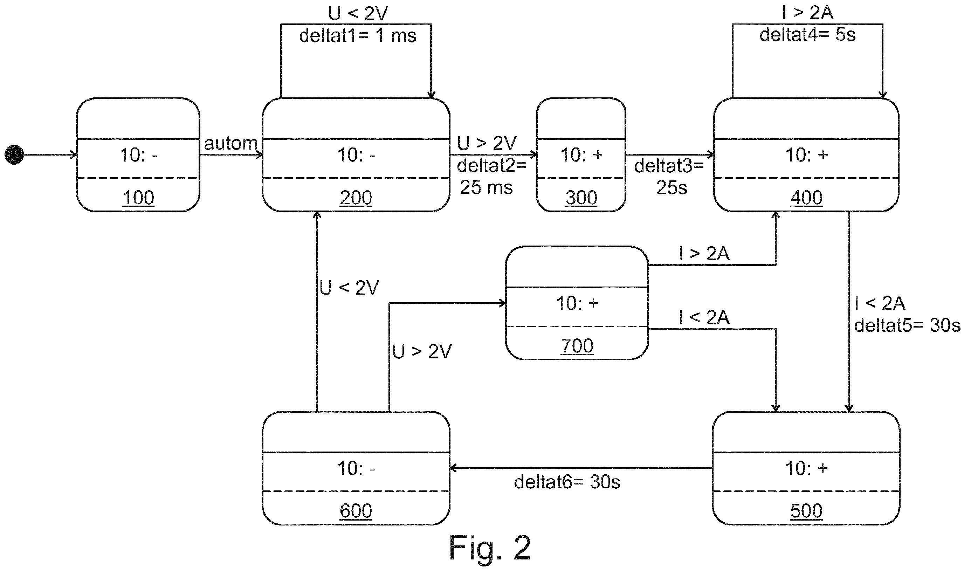

In der Figur 2 ist ein Zustandsdiagramm zur Überwachung von dem Verfahren zur Detektion des Verbrauchers 3 in der Ladestation 2 gezeigt: Dabei bedeutet das das Symbol "10: -", dass die die Trenneinrichtung 10 geöffnet ist und "10: +", dass die Trenneinrichtung 10 geschlossen ist. In diesem Ausführungsbeispiel erfolgt die Ladung mit einem Konstantstrom von 2,2 A bis 2,5 A. Das Schaltnetzteil 9 ist als eine Konstantstromquelle ausgebildet.

In einem Schritt 100 wird zur Initialisierung von der Versorgungseinrichtung 8 ein Ladestrom und/oder eine Ladespannung bereitgestellt, jedoch zugleich die Trenneinrichtung 10 (Figur 2: 10: -) geöffnet, so dass die Ladeschnittstelle 4 von Seiten der Ladestation 2 spannungslos gesetzt ist.

In einem Schritt 200 erfolgt bei geöffneter Trenneinrichtung 10 (Figur 2: 10: -) eine Andockerkennung und es wird der Spannungsabfall an dem Belastungswiderstand 12 gemessen und optional auf den Sperrstrom zurückgerechnet. Sofern der Spannungsabfall kleiner als 2 V ist wird die Messung zyklisch wiederholt, in diesem Ausführungsbeispiel jede Millisekunde (deltat1 = 1 ms).

Sobald ein Spannungsabfall größer als 2 V für eine vorgebbare Dauer, in diesem Beispiel von 25 ms (deltat2 > 25 ms) von der Detektionseinrichtung 11 erfasst wird, schließt die Steuereinrichtung 16 in einem Schritt 300 die Trenneinrichtung 10 (Figur 2: 10: +), so dass an der Ladeschnittstelle 4 eine Ladespannung anliegt und ein Ladestrom fließen kann. Die Versorgungseinrichtung 8 wird in den Ladezustand gesetzt. Der Ladezustand wird zumindest für eine vorgebbare Dauer (wait), bei diesem Ausführungsbeispiel von 25 Sekunden (deltat3 = 25 s), gehalten. Im dargestellten Ausführungsbeispiel dient diese vorgebbare fixe Zeit mit aufgeschalteter Ladespannung zum einen dazu, dem Verbraucher 3, der an die Ladestation 2 angedockt hat, ausreichend Zeit zur Einleitung des Ladevorgangs zu geben, und zum anderen, dem Verbraucher 3, der zwar anzudocken versuchte und dabei die Verbraucherdetektion ausgelöst hat, dabei aber nicht rechtzeitig stoppte und die Ladeschnittstelle 4 überfuhr, bessere Voraussetzungen für den nächsten Andockversuch zu schaffen.

In einem Schritt 400 erfolgt der Ladevorgang bzw. wird dieser fortgesetzt. Dabei wird der Ladestrom über die Ladestromprüfeinrichtung 14 durch die Detektionseinrichtung 11 erfasst und zyklisch, in diesem Ausführungsbeispiel alle 5 Sekunden (deltat4 = 5 s), geprüft. Sofern der Ladestrom über einen vorgebbaren Wert, in diesem Ausführungsbeispiel größer als 2 A, liegt, wird der Ladevorgang weitergeführt. Für den Fall, dass der Ladestrom I für eine vorgebbare Zeitdauer, bei diesem Ausführungsbeispiel für 30 Sekunden (delta5 = 30 s), unter dem vorgebbaren Wert liegt, wird zunächst darauf geschlossen, dass der Ladevorgang des Energiespeichers 18 abgeschlossen ist.

In einem Schritt 500 bleibt die Trenneinrichtung 10 (Figur 2: 10: +) weiterhin geschlossen, so dass die Ladespannung U anliegt und der Ladestrom I zumindest bereitgestellt ist. Da der Verbraucher 3 die Ladespannung U als Indikator (dass er sich auf der Ladestation 2 befindet) benötigt, bleibt die Ladespannung U aufgeschaltet. Daher wird die Steuereinrichtung 16 in kurzen Zeitintervallen (z. B. von wenigen Sekunden) die Ladespannung U kurz unterbrechen und erneut eine Spannungsmessung durchführen. Ist die Spannung aufgrund des Leckstroms durch die Sperrdiode 19 (Eingangsdiode) des Verbrauchers 3 höher als der Schwellwert, so geht die Steuereinrichtung 16 davon aus, dass sich der Verbraucher 3 weiterhin auf der Ladestation 2 befindet und schaltet die Ladespannung U erneut auf. Ist der Messwert kleiner als der Schwellwert, so hat der Verbraucher 3 offensichtlich die Ladestation 2 verlassen und die Ladespannung U wird zur Sicherheit von der Steuereinrichtung 16 über die Trenneinrichtung 10 abgeschaltet.

Somit wird zyklisch, bei diesem Ausführungsbeispiel alle 30s (deltat6 = 30 s), in einem Schritt 600 eine Abdockerkennung durchgeführt, welche wahlweise über die Messung des Spannungsabfalls über den Belastungswiderstand 12 bzw. dem Sperrstrom oder über die Systemprüfeinrichtung 15 erfolgen kann. Bei dem gezeigten Ausführungsbeispiel erfolgt die Abdockerkennung über den Belastungswiderstand 12, wobei die Trenneinrichtung 10 von der Steuereinrichtung 16 und/oder der Detektionseinrichtung 11 geöffnet wird (Figur 2: 10: -) und der Spannungsabfall U an dem Belastungswiderstand 12 von der Detektionseinrichtung 11 erfasst wird.

Für den Fall, dass der Spannungsabfall U über dem vorgebbaren Wert, in diesem Beispiel von 2 V, liegt, wird davon ausgegangen, dass der Verbraucher 3 an der Ladestation 2 angedockt ist. Dann wird durch die Detektionseinrichtung 11 und/oder Steuereinrichtung 16 die Trenneinrichtung 10 in einem Schritt 700 wieder geschlossen und es erfolgt eine Ladestrommessung durch die Ladestromprüfeinrichtung 14 und die Detektionseinrichtung 11. Sofern der Ladestrom I über dem vorgebbaren Wert, in diesem Fall von 2 A, liegt wird zu dem Schritt 400 zurückgekehrt. Für den Fall, dass der Ladestrom unter dem vorgebbaren Wert liegt, wird zu dem Schritt 500 zurückgegangen.

Für den Fall, dass in dem Schritt 600 der Spannungsfall U unter dem vorgebbaren Wert liegt, wird davon ausgegangen, dass der Verbraucher 3 von der Ladestation 2 abgekoppelt bzw. abgedockt ist, und es wird zu dem Schritt 200 zurückgekehrt.

### Bezugszeichenliste

- 1: Anordnung
- 2: Ladestation
- 3: Verbraucher
- 4: Ladeschnittstelle
- 5: Gegenschnittstelle
- 6a, b: Elektroden
- 7a, b: Gegenelektroden
- 8: Versorgungseinrichtung
- 9: Schaltnetzteil
- 10: Trenneinrichtung
- 11: Detektionseinrichtung
- 12: Belastungswiderstand
- 13: leer
- 14: Ladestromprüfeinrichtung
- 15: leer
- 16: Steuereinrichtung
- 17: Ladeeinrichtung
- 18: Energiespeicher
- 19: Sperrdiode

## Patentansprüche

1. Ladestation (2) für einen Verbraucher (3)
mit einer Ladeschnittstelle (4) mit Elektroden (6a, b) zur kontaktierenden Ankopplung des Verbrauchers (3), wobei der Verbraucher (3) eine Gegenschnittstelle (5), eine Ladeeinrichtung (17) und einen Energiespeicher (18) aufweist, wobei die Gegenschnittstelle (5) über die Ladeeinrichtung (17) mit dem Energiespeicher (18) verschaltet ist, so dass der Energiespeicher (18) über die Gegenschnittstelle (5) aufladbar ist,
mit einer Versorgungseinrichtung (8) zur Versorgung der Ladeschnittstelle (4), wobei die Versorgungseinrichtung (8) in einen Ladezustand und in einen Nicht-Ladezustand setzbar ist,
mit einer Detektionseinrichtung (11) zur Detektion der Ankopplung des Verbrauchers (3) an die Ladeschnittstelle (4),
wobei die Detektionseinrichtung (11) ausgebildet ist, bei einem Nicht-Ladezustand der Versorgungseinrichtung (8) eine elektrische Größe basierend auf der Energiespeicherspannung des Energiespeichers (18) als Detektionsgröße zur Detektion der Ankopplung des Verbrauchers (3) an die Ladeschnittstelle (4) zu erfassen, und
wobei die Ladeeinrichtung (17) eine Sperrdiode (19) aufweist, **dadurch gekennzeichnet, dass** die Detektionsgröße als ein Sperrstrom (I) durch die Sperrdiode (19) ausgebildet ist, und ein Belastungswiderstand (12) zwischen den Elektroden (6a, b) der Ladeschnittstelle (4) vorgesehen ist, wobei am Belastungswiderstand (12) weniger als 95% der an den Elektroden (6a, b) der Ladeschnittstelle (4) anliegenden Spannung abfällt, und dass
die Ladestation (2) eine Steuereinrichtung (16) enthält, wobei die Steuereinrichtung (16) ausgebildet ist, auf Basis der Detektionsgröße die Versorgungseinrichtung (8) zwischen dem Ladezustand und dem Nicht-Ladezustand umzuschalten.

2. Ladestation (2) nach Anspruch 1, **dadurch gekennzeichnet, dass** eine Detektion des Sperrstroms durch eine Spannungsdetektion über den Belastungswiderstand (12) zwischen den Elektroden (6a,b) der Ladeschnittstelle (4) erfolgt.

3. Ladestation (2) nach einem der vorhergehenden Ansprüche, **gekennzeichnet durch** eine Trenneinrichtung (10) zur Unterbrechung des Ladestroms (I) und/oder der Ladespannung, wobei die Steuereinrichtung (16) ausgebildet ist, die Trenneinrichtung (10) anzusteuern, um die Versorgungseinrichtung (8) zwischen dem Ladezustand und dem Nicht-Ladezustand umzuschalten.

4. Ladestation (2) nach einem der vorhergehenden Ansprüche, **gekennzeichnet durch** eine Ladestromprüfeinrichtung (14) zur Erfassung des Ladestroms (I).

5. Ladestation (2) nach Anspruch 4, **dadurch gekennzeichnet, dass** die Detektionseinrichtung (11) ausgebildet ist, bei einem Ladezustand der Versorgungseinrichtung (8) eine weitere elektrische Größe basierend auf dem Ladestrom (I) als weitere Detektionsgröße zur Detektion der Ankopplung des Verbrauchers (3) an die Ladeschnittstelle (4) zu erfassen.

6. Anordnung (1) umfassend die Ladestation (2) nach einem der vorhergehenden Ansprüche und den Verbraucher (3).

7. Verfahren zur Detektion des Verbrauchers (3) durch die Ladestation (2) nach einem der Ansprüche 1 bis 5 und/oder in einer Anordnung (1) nach Anspruch 6, wobei bei einem Nicht-Ladezustand der Versorgungseinrichtung (8) eine elektrische Größe basierend auf der Energiespeicherspannung des Energiespeichers (18) als Detektionsgröße, wobei die Detektionsgröße als ein Sperrstrom (I) durch die Sperrdiode (19) ausgebildet ist, zur Detektion der Ankopplung des Verbrauchers (3) an die Ladeschnittstelle (4) erfasst wird, ein Belastungswiderstand (12) zwischen den Elektroden (6a, b) der Ladeschnittstelle (4) vorgesehen ist, wobei am Belastungswiderstand (12) weniger als 95% der an den Elektroden (6a, b) der Ladeschnittstelle (4) anliegenden Spannung abfällt, und wobei die Steuereinrichtung (16) auf Basis der Detektionsgröße die Versorgungseinrichtung (8) zwischen dem Ladezustand und dem Nicht-Ladezustand umschaltet.

8. Verfahren nach Anspruch 7, **dadurch gekennzeichnet, dass** in einem Vorschritt die Versorgungseinrichtung (8) für eine Zeitdauer manuell in den Ladezustand gesetzt wird, um eine Grundladung des Energiespeichers (18) zu erreichen.

## Claims

1. Charging station (2) for a consumer (3)
with a charging interface (4) with electrodes (6a, b) for the contacting coupling of the consumer (3), wherein the consumer (3) has a mating interface (5), a charging facility (17) and an energy storage device (18), wherein the mating interface (5) is interconnected with the energy storage device (18) via the charging facility (17), so that the energy storage device (18) can be charged via the mating interface (5),
with a supply facility (8) for supplying the charging interface (4), wherein the supply facility (8) can be set into a charging state and a non-charging state,
with a detection facility (11) for detecting the coupling of the consumer (3) to the charging interface (4),
wherein the detection facility (11) is embodied, when the supply facility (8) is in a non-charging state, to acquire an electrical variable based on the energy storage voltage of the energy storage device (18) as detection variable for detecting the coupling of the consumer (3) to the charging interface (4), and
wherein the charging facility (17) has a blocking diode (19), **characterised in that** the detection variable is embodied as a reverse current (I) through the blocking diode (19), and a load resistance (12) is provided between the electrodes (6a, b) of the charging interface (4), wherein less than 95% of the voltage present at the electrodes (6a, b) of the charging interface (4) drops at the load resistance (12), and
the charging station (2) contains a control facility (16), wherein the control facility (16) is embodied to switch the supply facility (8) between the charging state and the non-charging state on the basis of the detection variable.

2. Charging station (2) according to claim 1, **characterised in that** a detection of the reverse current takes place by way of a voltage detection via the load resistance (12) between the electrodes (6a, b) of the charging interface (4).

3. Charging station (2) according to one of the preceding claims, **characterised by** a separation facility (10) for interrupting the charging current (I) and/or the charging voltage, wherein the control facility (16) is embodied to actuate the separation facility (10), in order to switch the supply facility (8) between the charging state and the non-charging state.

4. Charging station (2) according to one of the preceding claims, **characterised by** a charging current checking facility (14) for acquiring the charging current (I).

5. Charging station (2) according to claim 4, **characterised in that** the detection facility (11) is embodied, when the supply facility (8) is in the charging state, to acquire a further electrical variable based on the charging current (I) as further detection variable for detecting the coupling of the consumer (3) to the charging interface (4).

6. Arrangement (1) comprising the charging station (2) according to one of the preceding claims and the consumer (3).

7. Method for detecting the consumer (3) by way of the charging station (2) according to one of claims 1 to 5 and/or in an arrangement (1) according to claim 6, wherein, when the supply facility (8) is in a non-charging state, an electrical variable based on the energy storage voltage of the energy storage device (18) is acquired as detection variable, wherein the detection variable is embodied as a reverse current (I) through the blocking diode (19), for detecting the coupling of the consumer (3) to the charging interface (4), a load resistance (12) is provided between the electrodes (6a, b) of the charging interface (4), wherein less than 95% of the voltage present at the electrodes (6a, b) of the charging interface (4) drops at the load resistance (12), and wherein the control facility (16) is embodied to switch the supply facility (8) between the charging state and the non-charging state on the basis of the detection variable.

8. Method according to claim 7, **characterised in that** in a preceding step the supply facility (8) is set into the charging state manually for a period of time, in order to achieve a base charge of the energy storage device (18).

## Revendications

1. Station de charge (2) pour un consommateur (3),
avec une interface de charge (4) comprenant des électrodes (6a, b) permettant un couplage de contact du consommateur (3), dans laquelle le consommateur (3) présente une contre-interface (5), un dispositif de charge (17) et un accumulateur d'énergie (18), dans laquelle la contre-interface (5) est connectée à l'accumulateur d'énergie (18) par l'intermédiaire du dispositif de charge (17), de sorte que l'accumulateur d'énergie (18) peut être chargé par l'intermédiaire de la contre-interface (5),
avec un dispositif d'alimentation (8) permettant d'alimenter l'interface de charge (4), dans laquelle le dispositif d'alimentation (8) peut être placé dans un état de charge et dans un état de non-charge,
avec un dispositif de détection (11) permettant de détecter le couplage du consommateur (3) à l'interface de charge (4),
dans laquelle le dispositif de détection (11) est conçu, dans un état de non-charge du dispositif d'alimentation (8), afin de détecter une variable électrique basée sur la tension d'accumulation d'énergie de l'accumulateur d'énergie (18) en tant que variable de détection permettant de détecter le couplage du consommateur (3) à l'interface de charge (4), et
dans laquelle le dispositif de charge (17) présente une diode inverse (19), **caractérisée en ce que** la variable de détection est configurée en tant que courant inverse (I) à travers la diode inverse (19), et une résistance de charge (12) est prévue entre les électrodes (6a, b) de l'interface de charge (4), dans laquelle une chute de tension de moins de 95 % de la tension appliquée aux électrodes (6a, b) de l'interface de charge (4) intervient au niveau de la résistance de charge (12), et **en ce que**
la station de charge (2) contient un dispositif de commande (16), dans laquelle le dispositif de commande (16) est conçu afin de commuter le dispositif d'alimentation (8) entre l'état de charge et l'état de non-charge en se basant sur la variable de détection.

2. Station de charge (2) selon la revendication 1, **caractérisée en ce qu'**une détection du courant inverse intervient grâce à une détection de tension aux bornes de la résistance de charge (12) entre les électrodes (6a, b) de l'interface de charge (4).

3. Station de charge (2) selon l'une quelconque des revendications précédentes, **caractérisée par** un dispositif de coupure (10) permettant d'interrompre le courant de charge (I) et/ou la tension de charge, dans laquelle le dispositif de commande (16) est conçu afin de commander le dispositif de coupure (10) afin de commuter le dispositif d'alimentation (8) entre l'état de charge et l'état de non-charge.

4. Station de charge (2) selon l'une quelconque des revendications précédentes, **caractérisée par** un dispositif de contrôle de courant de charge (14) permettant de détecter le courant de charge (I).

5. Station de charge (2) selon la revendication 4, **caractérisée en ce que** le dispositif de détection (11) est conçu pour déterminer, dans un état de charge du dispositif d'alimentation (8), une autre valeur électrique basée sur le courant de charge (I) en tant que variable de détection supplémentaire afin de détecter le couplage du consommateur (3) à l'interface de charge (4).

6. Agencement (1) comprenant la station de charge (2) selon l'une quelconque des revendications précédentes et le consommateur (3).

7. Procédé de détection du consommateur (3) grâce à la station de charge (2) selon l'une quelconque des revendications 1 à 5 et/ou au sein d'un agencement (1) selon la revendication 6, dans lequel, dans un état de non-charge du dispositif d'alimentation (8), une variable électrique basée sur la tension d'accumulation d'énergie de l'accumulateur d'énergie (18) est détectée en tant que variable de détection afin de détecter le couplage du consommateur (3) à l'interface de charge (4), dans lequel la variable de détection est configurée en tant que courant inverse (I) à travers la diode inverse (19), une résistance de charge (12) est fournie entre les électrodes (6a, b) de l'interface de charge (4), dans lequel une chute de tension de moins de 95 % de la tension appliquée aux électrodes (6a, b) de l'interface de charge (4) intervient au niveau de la résistance de charge (12), et dans lequel le dispositif de commande (16) commute le dispositif d'alimentation (8) entre l'état de charge et l'état de non-charge en se basant sur la variable de détection.

8. Procédé selon la revendication 7, **caractérisé en ce que**, dans une étape préalable, le dispositif d'alimentation (8) est placé manuellement dans l'état de charge pendant une certaine durée afin d'obtenir une charge de base de l'accumulateur d'énergie (18).
